# EUROPEAN PATENT SPECIFICATION

(11) **EP 1 560 451 B1**
(45) Date of publication and mention of the grant of the patent: **05.10.2011**
(21) Application number: 05250428.9
(22) Date of filing: 27.01.2005
(51) Int. Cl.: H04W 24/02

(54) **Controlling telecommunication system parameters**
Steuern von Telekommunikationssystemparametern
Contrôler des paramètres de système de télécommunication

(30) Priority: 27.01.2004 GB 0401755
(43) Date of publication of application: 03.08.2005
(73) Proprietor: Vodafone Group PLC, Newbury Berkshire RG14 2FN (GB)
(72) Inventor: Law, Alan, Basingstoke, Hampshire RG22 4UJ (GB)
(74) Representative: Harries, Simon George

(56) References cited:
- EP-A- 1 274 268
- WO-A-2005/046084
- WO-A-2005/067324
- DE-A1- 19 836 145
- GB-A- 2 282 299
- US-A1- 2002 072 328

## Description

The present invention relates to apparatus and a method of configuring the parameters of a network dependent on the geographical location of the network unit and apparatus for invoking necessary changes in the configuration of the parameters of a network.

In the drawings, like elements are generally designated with the same reference numeral.

In order to allow mobile equipment registered with a mobile telecommunications network to operate without interference, a particular area is covered by a specific cell, each cell being served by one base transceiver station (BTS). Each cell is allocated particular frequency channels which may be used for radio transmissions between the BTS and mobile equipment within the cell. In a GSM (TDMA) network the same frequency channels are not used in neighbouring cells in order to prevent interference to radio communications occurring within neighbouring cells other parameters may also be varied to reduce or prevent interference. Other parameters may also be varied to reduce or prevent interference. Different considerations apply to CDMA networks, where system parameters for power, frequency, bandwidth, coding, modulation etc. are adapted to ensure that the system operates within the bounds of the constraints that have been configured into the unit. The invention is applicable to all types (and combination of) networks, including TDMA- and CDMA - based networks.

In the example of a GSM (TDMA) network, cells are typically of an area of 10 square miles, with smaller cells covering more densely populated areas. Mobile equipment and BTSs utilise low power transmitters, meaning that the same frequency channels can be re-used in non-adjacent cells. As a mobile telephone moves from the coverage area of a first cell to the coverage area of a second cell, there is a switch in the BTS handling any calls from the BTS associated with the first cell to the BTS associated with the second cell in a process known as "handoff". A handoff is processed by either the BTS controller (BSC) or mobile switching centre (MSC) depending on the type of handoff involved.

A different process occurs when a mobile telephone moves from a first country to a second country, known as "roaming". When a mobile telephone user crosses a national boundary, or moves into coverage of a different network when roaming, the service will become unavailable and the user will have to redial to continue the call on the new network. The handset will then scan for all the networks it can detect, and then decide which to use. The mobile telephone is then in the coverage area of a cell in the second country, associated with a new network service provider, and usage can continue with handoffs being processed by the BTS or the MSC of the new service provider. The handover from the first service provider to the second service provider therefore causes an inconvenience for a user wishing to roam as described.

In the embodiment to be described a BTS of the mobile telecommunications network is portable (that is, it operates at different geographical locations). Mobile equipment users who are subscribers to a particular mobile telecommunications network with which that BTS is associated are able to access network services as if the BTS was a conventional BTS fixed on land. Such an arrangement is particularly suited to use on a cruise liner, where a BTS could be located on the cruise liner to enable the cruise liner passengers to make mobile telephone calls. It should however be appreciated that the invention is not limited to this particular use and could instead be applied to any situation requiring a portable BTS - such as on board a train, aeroplane or any other moving vehicle.

The portable BTS may operate (that is, provide mobile telecommunication services) while it is moving between geographical locations. However, the invention is also applicable to a BTS that can be deployed at different geographical locations, but does not operate when being transported between these locations. Such an arrangement is advantageous, for example, when a BTS is required temporarily at a location - such as where a special event is held at which a large number of attendees are expected.

Current known systems employed on cruise liners and in similar situations are manually configured to operate with predetermined network parameters. For example, a mobile telecommunications system, comprising a portable BTS, operating on a cruise liner will be switched off as it approaches new territorial waters to ensure that the system is not in contravention of regulations of that new territory as the international border is crossed. When the cruise liner has travelled into the new territorial waters, the mobile telecommunications system on board the cruise liner may be made available once again to users, with the system now operating under the configuration predetermined to be compatible with the negotiated roaming agreement between the onboard system provider and the body regulating mobile telecommunications of the country governing the new territorial waters, this configuration being invoked as the system is made available on the cruise liner once again. Such an arrangement is inconvenient for users wishing to access telecommunication services via the portable BTS when the system is being reconfigured and the system is unavailable.

An alternative to this known system is not to operate that system on board the cruise liner when the cruise liner enters territorial waters. Instead, the passengers can make use of the networks provided by the country governing the territorial waters. However, this arrangement suffers from the same disadvantage - that service is interrupted when the onboard system is shut down - and also results in a loss of revenue for the onboard system operator.

In a prior art arrangement EP 1274268 describes an approach for controlling a mobile base station in a mobile system so that it does not interfere with neighbouring base stations.

According to a first aspect of the present invention, there is provided a method of allowing use of a movable transceiver in a temporary position in a mobile telecommunications system, which system has a plurality of other transceivers associated therewith for wirelessly transmitting data between each transceiver and terminals registered with the system, the method including:
determining the temporary position of the movable transceiver, such that the determined temporary position is in a first region, and the other transceivers are in a second region,
determining the transmission parameters used by the other transceivers associated with the system,
determining suitable parameters usable by the movable transceiver for allowing communication between the movable transceiver and terminals registered with the system, such that the determined parameters are compatible with the parameters used by the other transceivers, the method characterised by:
   determining a set of hybrid parameters suitable for use in both the first region and the second region, and
   migrating from a current set of parameters to the determined compatible parameters via the hybrid parameters.

According to a second aspect of the present invention, there is provided apparatus for allowing use of a movable transceiver in a temporary position in a mobile telecommunications system, which system includes a plurality of other transceivers associated therewith for wirelessly transmitting data between each transceiver and terminals registered with the system, the apparatus including:
means (5) configured for determining the temporary position of the movable transceiver (3), such that the determined temporary position is in a first region, and the other transceivers are in a second region,
means configured for determining transmission parameters used by said other transceivers in the system,
means configured for determining suitable parameters usable by the movable transceiver for allowing communications between the movable transceiver and terminals registered with the system such that the determined parameters are compatible with the parameters used by the other transceivers, and the apparatus is characterised by:
   means configured for determining a set of hybrid parameters suitable for use in both the first region and the second region, and
   means configured for migrating from a current set of parameters to the calculated compatible parameters via the hybrid parameters.

Apparatus and a method for allowing use of a movable transceiver in a temporary position according to the invention will now be described, by way of example only, with reference to the accompanying drawings in which:
Figure 1 is a diagrammatic drawing of a first scenario to which the present invention is applicable;
Figure 2 is a diagrammatic drawing of a second scenario to which the present invention is applicable;
Figure 3 is a flow diagram showing the sequence of events describing the network metamorphosis in accordance with an embodiment of the present invention;
Figure 4 is a diagrammatic drawing showing the migration of the network parameters as a mobile base transceiver station passes from a first geographical area to a second geographical area in accordance with the first scenario; and
Figure 5 is a diagrammatic drawing showing the migration of the network parameters as the mobile base transceiver station passes from a first geographical area to a second geographical area in accordance with the second scenario.

The embodiment to be described is concerned with such a situation in which the cruise liner is crossing an international border, thereby requiring a change in the configuration of the onboard system parameters. Using a Network Metamorphosis Configuration Control (NMCC system), the BTS configuration is gradually migrated to a configuration predetermined to be compatible with the negotiated roaming agreement between the network provider controlling the onboard system and the body regulating mobile telecommunications of the country governing the new territorial waters. That is, the characteristics of the radio communications between the BTS and the mobile equipment are changed to be compatible with the new location. The frequency channels used, the transmission power levels and even the communication protocols (to allow BTS to operate in a different network type) may all be altered. The NMCC system therefore allows better customer service by enabling mobile communication services to be available to users uninterrupted for an increased amount of time, particularly during the crossing of international borders.

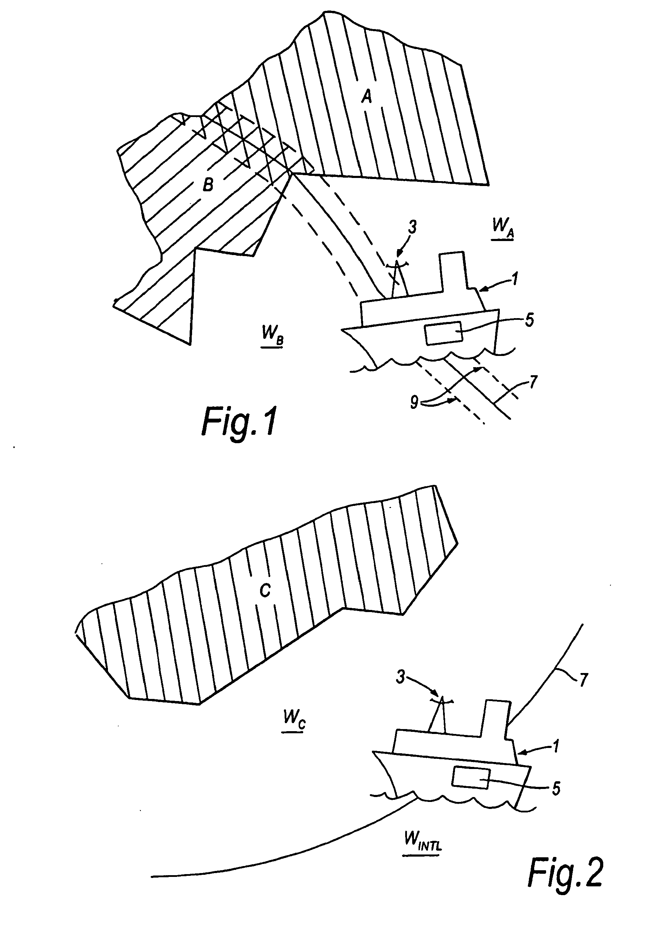

A first scenario to which the present invention is applicable is the situation of a cruise liner 1 leaving the territorial waters W_{A} of Country A and travelling into the territorial waters W_{B} of Country B, and is shown in Figure 1. The cruise liner 1 has onboard a BTS 3 associated with a mobile telecommunications network, allowing passengers who are subscribers to the particular mobile telecommunications network associated with that BTS 3 to access network services using their mobile equipment as if the BTS 3 was a conventional BTS of that network fixed on land. The traffic from the BTS 3 is transmitted to a satellite and from there to the particular network (although any other means for transmitting this traffic from the BTS 3 could be used). Subscribers to different networks which have a roaming agreement with the network operating the onboard BTS can also obtain service.

Before the international border is reached, the cruise liner 1 is in the territorial waters W_{A} of Country A and a network (network "N") utilising the BTS 3 will be configured to operate that BTS 3 within the parameters predetermined by the negotiated roaming agreement between the network N provider and Country A. This agreement ensures that the portable BTS 3 located on the cruise liner 1 operates in a manner that is compatible with the technological capability of the BTS controllers (BSCs) of Country A. The agreement also ensures that the portable BTS 3 complies with the regulations of Country A concerning, for example, permitted transmission power levels and permitted radiation levels. Additionally, the agreement will include certain frequency channels allocated to the network N provider to ensure that the portable BTS 3 does not interfere with other BTSs located in Country A.

The parameters predetermined by the negotiated roaming agreement between the network N provider and Country B may differ from the parameters predetermined by the negotiated roaming agreement between the network N provider and Country A. For example, the permitted transmission power levels and permitted radiation levels may be different. The technological capability of the BSCs of Country B may also be different (Country A may operate one network type, for example GSM, while Country B operates a different network type, for example IS-95).

The cruise liner 1 contains a NMCC unit 5 which is able to determine the precise location of the BTS 3 using any suitable means, for example using a satellite navigation system such as the Global Positioning System (GPS) or cell triangulation. The NMCC unit will therefore be aware of the cruise liner 1 (and hence the BTS 3) approaching an international border 7. There exists an area 9 extending, for example, 15 kilometres into the territorial waters either side of an international border 7 in which the telecommunications network N is able to operate within the parameters compliant with the regulations of both Country A and Country B. The NMCC unit is therefore able to gradually migrate the telecommunications network N operating through BTS 3 from the parameters predetermined by the negotiated roaming agreement between the network N provider and Country A to those parameters predetermined by the negotiated roaming agreement between the network N provider and Country B, as will be described hereinafter.

Figure 2 describes a second scenario, in which the cruise liner 1 of Figure 1 is instead leaving international waters W_{INTL} and travelling into the territorial waters W_{C} of Country C. Before the international border is reached, the cruise liner 1 is in international waters W_{INTL} and the network N utilising the BTS 3 will not be under any regulatory constraints. The network N will therefore be able to use any appropriate frequency channel without the risk of interference.

The NMCC unit 5 contained onboard the cruise liner 1 uses its satellite navigation system such as GPS to determine when the cruise liner 1 (and hence the BTS 3) is approaching an international border 7. When such an international border 7 is approached, the NMCC unit 5 is therefore able to gradually migrate the parameters used by BTS 3 from the parameters currently being used in the international waters to those parameters predetermined by the negotiated roaming agreement between the network provider and Country C, as will be described hereinafter.

Whilst the cruise liner 1 is in the territorial waters of Country A,B or C, the GPS may also be used to alter the frequency channels used by the BTS 3 as the cruise liner 1 moves around. For example, when the cruise liner 1 nears the coast of a country, fixed BTSs on land will provide coverage in a area overlapping with the coverage provided by the onboard BTS 3. To prevent interference, it is necessary for the frequency channels used by BTS 3 to be selected from those available in the relevant country so as not to conflict with frequency channels used by a neighbouring fixed BTS. When the position of the onboard BTS 3 is known, this allows the appropriate frequency channels for that BTS 3 to be calculated, if the frequency channels used by the neighbouring fixed BTS are known. This calculation can be done, for example, by the NMCC units.

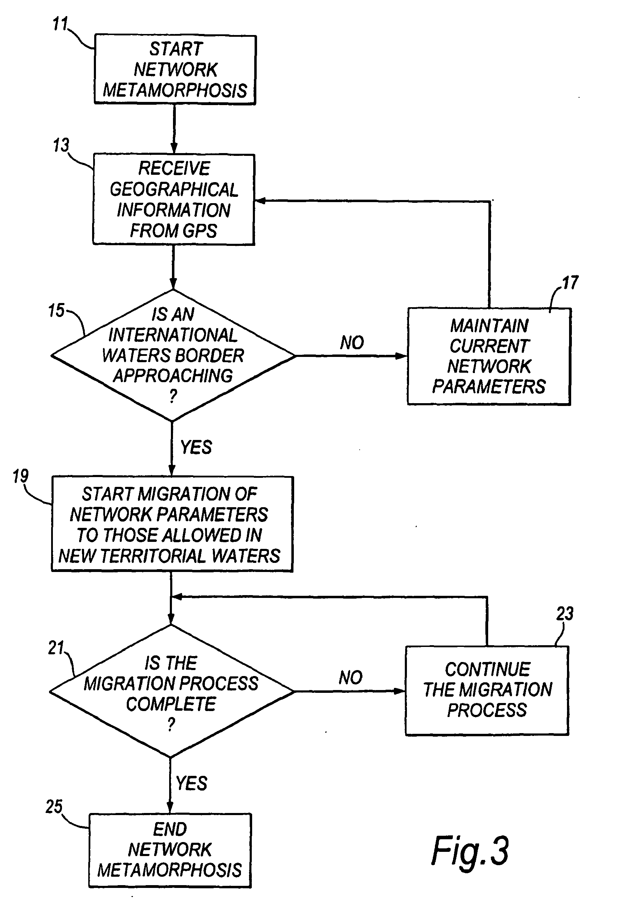

Figure 3 is a flow diagram showing the sequence of events describing the network metamorphosis and occurring in the NMCC unit 5 as the cruise liner 1 and the portable BTS 3 approach new territorial waters. This flow diagram is applicale to both the first scenario (in which case the network parameters are being migrated from a first particular configuration as predetermined by the negotiated roaming agreement between the network provider and Country A to a second particular configuration as predetermined by the negotiated roaming agreement between the network provider and Country B) and the second scenario (in which case the network parameters are being migrated from a first particular configuration without regulatory constraints with the cruise liner 1 in international waters to a second particular configuration as predetermined by the negotiated roaming agreement between the network provider and Country C).

The sequence of events describing the network metamorphosis as the cruise liner 1 approaches an international border 7 starts with block 11. At block 13 the NMCC unit 5 receives geographical information from the GPS. The NMCC unit 5 then determines whether or not an international border 7 is approaching (decision block 15). If the cruise liner 1 is not approaching an international border 7, the NMCC unit 5 maintains the current network parameters (block 17) which are either configured to operate within the parameters predetermined by the negotiated roaming agreement between the network N provider and Country A (in the first scenario) or configured to operate without regulatory constraints (in the second scenario). The NMCC unit 5 continuously receives geographical information from the GPS (block 13) and monitors continuously whether or not an international border 7 is approaching (decision block 15).

When the NMCC unit 5 determines that the cruise liner 1 is approaching an international border 7 (at step 15), it starts the network migration process described by block 19 by gradually migrating the network parameters used by BTS 3 from the parameters predetermined by the negotiated roaming agreement between the network N provider and Country A to those parameters predetermined by the negotiated roaming agreement between the network N provider and Country B (in the first scenario). Alternatively, and in the second scenario, the network migration process described by block 19 of Figure 3 involves gradually migrating the network parameters used by BTS 3 from the parameters used in international waters, and therefore configured to operate without regulatory constraints, to those parameters predetermined by the negotiated roaming agreement between the network provider and Country C. After a predetermined period of time the NMCC unit 5 will check the progress of the network migration (decision block 21). If the NMCC unit 5 determines that migration from the first network configuration to the second network configuration is incomplete, it will continue the network migration process as indicated by block 23 of Figure 3. In this case, the NMCC unit 5 will check the progress of the network migration repeatedly at predetermined time intervals (decision block 21). Once the NMCC unit 5 determines that the network migration process is complete, the network metamorphosis ends as indicated by block 25.

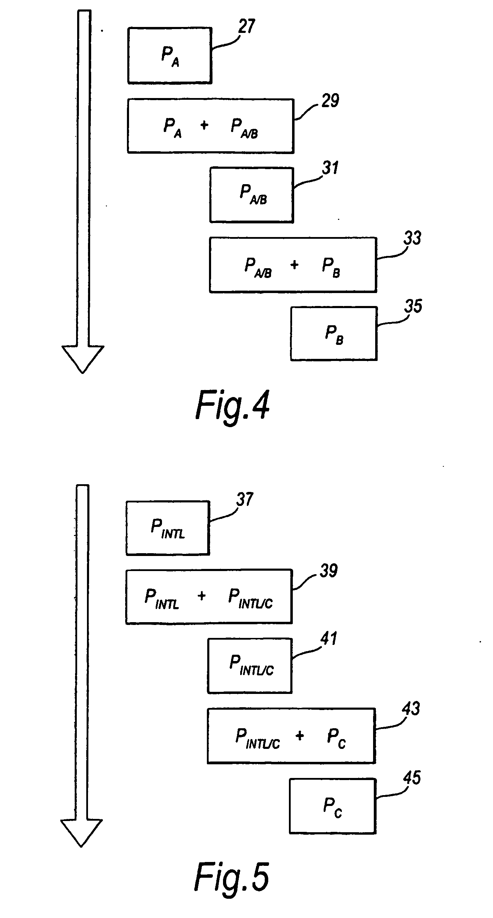

Figure 4 details the migration of the network parameters that takes place at block 19 of Figure 3, in the first scenario. The NMCC unit 5 may implement a remote resource algorithm which calculates the necessary changes in the configuration of the parameters based on GPS information, the presently used network parameters and the network parameters applicable to networks operated in the country being approached, or the necessary changes in the configuration of the parameters may be invoked by any other suitable means - for example using data from the network N sent via the satellite link. At step 27, the NMCC unit 5 has not started the migration process and the network parameters P_{A} are configured to operate within the pre-negotiated roaming agreement between the network N provider and Country A. As the migration process starts, a new set of parameters P_{A/B} (consisting of a hybrid of the parameters pre-negotiated with Country A and the parameters pre-negotiated with Country B) are introduced at step 29. At this point the BTS 3 is able to operate within the parameters designated by P_{A} and also within the parameters designated by P_{A/B}. As the migration process continues the original parameters P_{A} are made unavailable (step 31). At this point, the network is reliant on the hybrid parameters P_{A/B} (that is calls between mobile equipment and the onboard BTS 3 will be made only in accordance with those parameters). At step 33 the parameters P_{B}, which are configured to operate within the pre-negotiated roaming agreement between the network N provider and Country B, are introduced allowing the network N to operate within the parameters designated by P_{A/B} and also within the parameters designated by P_{B}. To complete the migration process, the hybrid parameters P_{A/B} are made unavailable at step 35, thereby allowing the network N to only operate using the parameters P_{B} configured to operate within the pre-negotiated roaming agreement between the network provider and Country B.

The "hybrid" parameters P_{A/B} are parameters that are acceptable for use in both Country A and Country B.

Figure 5 details the migration of the network parameters that takes place at block 19 of Figure 3, in the second scenario. Again, the BTS 3 may include a remote resource algorithm which invokes the necessary changes in the configuration of the parameters, or the necessary changes in the configuration of the parameters could be invoked by any other suitable means. At step 37, the NMCC unit 5 has not started the migration process and the network parameters P_{INTL} are operating without regulatory constraint as the cruise liner 1 is in international waters. As the migration process starts, a new set of parameters P_{INTL/C} (consisting of a hybrid of the parameters used in international waters and the parameters pre-negotiated with Country C) are introduced at step 39. At this point the BTS 3 is able to operate within the parameters designated by P_{INTL} and also within the parameters designated by P_{INTL/C}. As the migration process continues the original parameters P_{INTL} are made unavailable (step 41). At this point, the BTS 3 is able to operate using the hybrid parameters P_{INTL/C}. At step 43 the parameters P_{C}, which are configured to operate within the pre-negotiated roaming agreement between the network provider and Country C, are introduced allowing the BTS 3 to operate within the parameters designated by P_{INTL/C} and also within the parameters designated by P_{C}. To complete the migration process, the hybrid parameters P_{INTL/C} are made unavailable at step 45, thereby allowing the BTS 3 to only operate using the parameters P_{C} configured to operate within the pre-negotiated roaming agreement between the network provider and Country C.

The parameters P_{A}, P_{B}, P_{C} and P_{MTL} include details of frequency channels that are available in that territory. As discussed above, within any territory, different BTSs will use frequency channels for communication with mobile equipment that are selected from those available so as not to interfere with radio communications in neighbouring cells.

When all BTSs are fixed, the frequency channels for each BTS can be predetermined and it is not necessary to change them in real time. However, when the onboard BTS 3 moves within a territory, the frequency channels used by the BTS 3 are varied in accordance with a determination of the position of the BTS 3 (by GPS) and data indicating the frequency used in different areas (cells) within the territory. An algorithm on the NMCC unit 5 uses this information to calculate in real time frequency channels that should be used which will avoid interference with neighbouring cells. The BTS 3 will change the frequency channels used by the mobile equipments communication with it in dependence upon this calculation to provide continuous service within a country.

In another embodiment, a BTS is provided that can be employed temporarily in a desired location. For example, a temporary BTS may be required where extra network capacity is needed. The BTS is transported to the desired location, during which time it is inoperative. When the BTS is deployed in the desired location, its NMCC determines the position of the BTS (for example using GPS or by manual entry of this data). This position information, in conjunction with data indicating the frequency channels used in neighbouring cells, enables the NMCC to select suitable frequency channels for use by the BTS that will not interfere with neighbouring cells.

## Claims

1. A method of allowing use of a movable transceiver (3) in a temporary position in a mobile telecommunications system, which system has a plurality of other transceivers associated therewith for wirelessly transmitting data between each transceiver and terminals registered with the system, the method including:
determining the temporary position of the movable transceiver, such that the determined temporary position is in a first region (A; Intl), and the other transceivers are in a second region (B; C),
determining the transmission parameters used by the other transceivers associated with the system,
determining suitable parameters usable by the movable transceiver (3) for allowing communication between the movable transceiver (3) and terminals registered with the system, such that the determined parameters are compatible with the parameters used by the other transceivers, the method **characterised by**:
determining a set of hybrid parameters suitable for use in both the first region and the second region, and
migrating from a current set of parameters to the determined compatible parameters via the hybrid parameters.

2. The method of claim 1 wherein the migrating step further comprises:
configuring the movable transceiver so that it is operable with the current set of parameters and the hybrid parameters, and
then configuring the movable transceiver so that the current set of parameters are no longer available, but such that it is operable with the determined compatible parameters and the hybrid parameters.

3. The method of claim 2 further including subsequently configuring the movable transceiver so that it is only operable with the determined compatible parameters.

4. The method of any one preceding claim wherein the migrating step is commenced when the movable transceiver is determined to be approaching a network coverage border (7) of the other transceivers.

5. The method of any one preceding claim wherein a transitional area (9) exists about a boundary (7) between the first region (A) and the second region (B), the method further including:
determining the moveable transceiver to be moving towards the second region (B); and
migrating from the current set of parameters to the determined compatible parameters as the movable transceiver crosses the transitional area (9) from the first region (A) to the second region (B).

6. The method of claim 1, wherein the telecommunications system comprises a plurality of networks, each having a geographical extent and each having a subset of said other transceivers associated therewith and wherein the position determining step determines the position of the movable transceiver with respect to the plurality of networks, the transmission parameter determining step determines the transmission parameters used by the transceivers associated with the networks.

7. The method of claim 6, wherein the calculating step calculates transmission parameters suitable for use with the networks within a predetermined range of the movable transceiver.

8. The method of any one preceding claim, wherein the movable transceiver and said other transceivers each comprise a base station transceiver, and
said step of determining said transmission parameters comprises determining frequencies at which transmissions between the other transceivers and terminals are performed, and
said step of determining suitable parameters determines suitable frequencies usable by the movable transceiver that will tend not to interfere with the transmissions of neighbouring base station transceivers and for allowing communications between the movable base station transceiver and the terminals in accordance with the suitable frequencies.

9. The method of claim 1, wherein the position determining step determines when the movable transceiver is approaching a network, the transmission parameter determining step determines the transmission parameters of the approached network, and the step of determining suitable compatible parameters includes selecting transmission parameters predetermined to be compatible with the transmission parameters of the approached network.

10. A method according to any one of the preceding claims, wherein the position determining step is performed by GPS.

11. Apparatus for allowing use of a movable transceiver (3) in a temporary position in a mobile telecommunications system, which system includes a plurality of other transceivers associated therewith for wirelessly transmitting data between each transceiver and terminals registered with the system, the apparatus including:
means (5) configured for determining the temporary position of the movable transceiver (3), such that the determined temporary position is in a first region (A; Intl), and the other transceivers are in a second region (B;C),
means configured for determining transmission parameters used by said other transceivers in the system,
means configured for determining suitable parameters usable by the movable transceiver (3) for allowing communications between the movable transceiver and terminals registered with the system such that the determined parameters are compatible with the parameters used by the other transceivers, and the apparatus is **characterised by**:
means configured for determining a set of hybrid parameters suitable for use in both the first region and the second region, and
means configured for migrating from a current set of parameters to the calculated compatible parameters via the hybrid parameters.

12. Apparatus of claim 11 wherein the migrating means is adapted to:
configure the movable transceiver so that it is operable with the current set of parameters and the hybrid parameters, and
then configure the movable transceiver so that the current set of parameters are no longer available, but such that it is operable with the determined compatible parameters and the hybrid parameters.

13. The apparatus of claim 12 wherein the migrating means is further adapted to subsequently configure the movable transceiver so that it is only operable with the determined compatible parameters.

14. The apparatus of any one of claims 11 to 13 wherein the migrating means is further configured to commence the migration when the movable transceiver (3) is determined to be approaching a network coverage border for the other transceivers.

15. The apparatus of claim 11, 12 or 13 wherein a transitional area (9) exists about a border (7) between the first region (A) and the second region (B), and the means (5) configured for determining transmission parameters is further configured to determine when the moveable transceiver (3) is moving, and the migration means is further configured for migrating from the current set of parameters to the determined compatible parameters as the movable transceiver (3) crosses the transitional area (9) from the first region (A) to the second region (B).

16. The apparatus of any one of claims 11 to 15, wherein the telecommunications system comprises a plurality of networks, each having a geographical extent and each having a subset of said other transceivers associated therewith and such that:
the position determining means is operable to determine the position of the movable transceiver with respect to the plurality of networks, and
the transmission parameter determining means is operable to determine the transmission parameters used by the transceivers associated with the networks within a predetermined range of the movable transceiver.

17. The apparatus of claim 16, wherein the suitable parameter determining means is operable to calculate transmission parameters suitable for use with the networks within a predetermined range of the movable transceiver.

18. The apparatus of claim 16 or 17, wherein the networks are selected from GSM, 3G UMTS and IS-95.

19. The apparatus of claim 16, 17 or 18, wherein the networks are of different types.

20. The apparatus of any one of claims 11 to 19, wherein the movable transceiver and said other transceivers each comprise a base station transceiver,
said transmission parameter determining means is configured to determine frequencies at which transmissions between the base stations and terminals are performed, and
said suitable parameter determining means is operable to determine suitable frequencies usable by the movable transceiver that will tend not to interfere with the transmissions of neighbouring base station transceivers and for allowing communications between the movable base station transceiver and the terminals in accordance with the suitable frequencies.

21. The apparatus of any one of claims 11 to 20, wherein the suitable parameter determining means is operable to select transmission parameters predetermined to be compatible with the transmission parameters of the approached network.

22. The apparatus of any one of claims 11 to 21, wherein the position determining means (5) uses GPS.

## Patentansprüche

1. Verfahren zum Zulassen der Verwendung eines mobilen Senders/Empfängers (3) in einer vorübergehenden Position in einem mobilen Telekommunikationssystem, wobei mit dem System mehrere andere Sender/Empfänger zum drahtlosen Übertragen von Daten zwischen jedem Sender/Empfänger und bei dem System registrierten Endgeräten assoziiert sind, wobei das Verfahren Folgendes beinhaltet:
Ermitteln der vorübergehenden Position des mobilen Senders/Empfängers, so dass die ermittelte vorübergehende Position in einer ersten Region (A; Intl.) und die anderen Sender/Empfänger in einer zweiten Region (B; C) sind,
Ermitteln der von den anderen mit dem System assoziierten Sendern/Empfängern verwendeten Übertragungsparameter,
Ermitteln von geeigneten Parametern, die von dem mobilen Sender/Empfänger (3) benutzt werden können, um Kommunikationen zwischen dem mobilen Sender/Empfänger (3) und bei dem System registrierten Endgeräten zu ermöglichen, so dass die ermittelten Parameter mit den von den anderen Sendern/Empfängern benutzten Parametern kompatibel sind, wobei das Verfahren **gekennzeichnet ist durch**:
Ermitteln eines Satzes von Hybridparametern, die für die Verwendung in der ersten und der zweiten Region geeignet sind, und
Umstellen von einem aktuellen Satz von Parametern auf die ermittelten kompatiblen Parameter über die Hybridparameter.

2. Verfahren nach Anspruch 1, wobei der Umstellschritt ferner Folgendes beinhaltet:
Konfigurieren des mobilen Senders/Empfängers, so dass er mit dem aktuellen Satz von Parametern und den Hybridparametern betrieben werden kann, und
dann Konfigurieren des mobilen Senders/Empfängers, so dass der aktuelle Satz von Parametern nicht mehr zur Verfügung steht, aber so, dass er mit den ermittelten kompatiblen Parametern und den Hybridparametern betrieben werden kann.

3. Verfahren nach Anspruch 2, das ferner das nachfolgende Konfigurieren des mobilen Senders/Empfängers beinhaltet, so dass er nur mit den ermittelten kompatiblen Parametern betrieben werden kann.

4. Verfahren nach einem der vorherigen Ansprüche, wobei der Umstellschritt dann begonnen wird, wenn ermittelt wird, dass sich der mobile Sender/Empfänger einer Netzwerkdeckungsgrenze (7) der anderen Sender/Empfänger nähert.

5. Verfahren nach einem der vorherigen Ansprüche, wobei ein Übergangsbereich (9) um eine Grenze (7) zwischen der ersten Region (A) und der zweiten Region (B) existiert, wobei das Verfahren ferner Folgendes beinhaltet:
Ermitteln, dass sich der mobile Sender/Empfänger auf die zweite Region (B) zu bewegt; und
Umstellen von dem aktuellen Satz von Parametern auf die ermittelten kompatiblen Parameter, wenn der mobile Sender/Empfänger den Übergangsbereich (9) von der ersten Region (A) zur zweiten Region (B) überquert.

6. Verfahren nach Anspruch 1, wobei das Telekommunikationssystem mehrere Netzwerke umfasst, die jeweils ein geografisches Ausmaß haben und die jeweils eine Teilmenge der genannten damit assoziierten Sender/Empfänger haben, und wobei der Positionsermittlungsschritt die Position des mobilen Senders/Empfängers mit Bezug auf die Mehrzahl von Netzwerken ermittelt, wobei der Übertragungsparameterermittlungsschritt die Übertragungsparameter ermittelt, die von den mit den Netzwerken assoziierten Sendern/Empfängern benutzt werden.

7. Verfahren nach Anspruch 6, wobei der Berechnungsschritt die Übertragungsparameter berechnet, die für die Verwendung mit den Netzwerken innerhalb einer vorbestimmten Entfernung von dem mobilen Sender/Empfänger geeignet sind.

8. Verfahren nach einem der vorherigen Ansprüche, wobei der mobile Sender/Empfänger und die genannten anderen Sender/Empfänger jeweils einen Basisstations-Sender/Empfänger haben, und
der genannte Schritt des Ermittelns der genannten Übertragungsparameter das Ermitteln von Frequenzen beinhaltet, auf denen Übertragungen zwischen den anderen Sendern/Empfängern und Endgeräten durchgeführt werden, und
der genannte Schritt des Ermittelns geeigneter Parameter geeignete Frequenzen ermittelt, die von dem mobilen Sender/Empfänger benutzt werden können, der dazu neigt, die Übertragungen benachbarter Basisstations-Sender/Empfänger nicht zu stören und Kommunikationen zwischen dem mobilen Basisstations-Sender/Empfänger und den Endgeräten gemäß den geeigneten Frequenzen zuzulassen.

9. Verfahren nach Anspruch 1, wobei der Positionsermittlungsschritt ermittelt, wenn sich der mobile Sender/Empfänger einem Netzwerk nähert, wobei der Übertragungsparameterermittlungsschritt die Übertragungsparameter des herannahenden Netzwerks ermittelt und der Schritt des Ermittelns geeigneter kompatibler Parameter das Auswählen von Übertragungsparametern beinhaltet, die als mit den Übertragungsparametern des herannahenden Netzwerks kompatibel vorbestimmt wurden.

10. Verfahren nach einem der vorherigen Ansprüche, wobei der Positionsermittlungsschritt per GPS durchgeführt wird.

11. Vorrichtung zum Zulassen der Verwendung eines mobilen Senders/Empfängers (3) in einer vorübergehenden Position in einem mobilen Telekommunikationssystem, wobei das System mehrere andere damit assoziierte Sender/Empfänger zum drahtlosen Übertragen von Daten zwischen jedem Sender/Empfänger und bei dem System registrierten Endgeräten beinhaltet, wobei die Vorrichtung Folgendes umfasst:
Mittel (5), die zum Ermitteln der vorübergehenden Position des mobilen Senders/Empfängers (3) konfiguriert sind, so dass die ermittelte vorübergehende Position in einer ersten Region (A; Intl.) ist und die anderen Sender/Empfänger in einer zweiten Region (B; C) sind,
Mittel, die zum Ermitteln von Übertragungsparametern konfiguriert sind, die von den genannten anderen Sendern/Empfängern in dem System verwendet werden,
Mittel, die zum Ermitteln von geeigneten Parametern konfiguriert sind, die von dem mobilen Sender/Empfänger (3) benutzt werden können, um Kommunikationen zwischen dem mobilen Sender/Empfänger und bei dem System registrierten Endgeräten zuzulassen, so dass die ermittelten Parameter mit den von den anderen Sendern/Empfängern benutzten Parametern kompatibel sind, wobei die Vorrichtung **gekennzeichnet ist durch**:
Mittel, die zum Ermitteln eines Satzes von Hybridparametern konfiguriert sind, die für die Verwendung in der ersten Region und in der zweiten Region geeignet sind, und
Mittel, die zum Umstellen von einem aktuellen Satz von Parametern auf die berechneten kompatiblen Parameter über die Hybridparameter konfiguriert sind.

12. Vorrichtung nach Anspruch 11, wobei das Umstellmittel ausgelegt ist zum:
Konfigurieren des mobilen Senders/Empfängers, so dass er mit dem aktuellen Satz von Parametern und den Hybridparametern betrieben werden kann, und
dann Konfigurieren des mobilen Senders/Empfängers so, dass der aktuelle Satz von Parametern nicht mehr zur Verfügung steht, aber so, dass er mit den ermittelten kompatiblen Parametern und den Hybridparametern betrieben werden kann.

13. Vorrichtung nach Anspruch 12, wobei das Umstellmittel ferner zum nachfolgenden Konfigurieren des mobilen Senders/Empfängers ausgelegt ist, so dass er nur mit den ermittelten kompatiblen Parametern betrieben werden kann.

14. Vorrichtung nach einem der Ansprüche 11 bis 13, wobei das Umstellmittel ferner so konfiguriert ist, dass es die Umstellung beginnt, wenn ermittelt wird, dass sich der mobile Sender/Empfänger (3) einer Netzwerkdeckungsgrenze für die anderen Sender/Empfänger nähert.

15. Vorrichtung nach Anspruch 11, 12 oder 13, wobei ein Übergangsbereich (9) um eine Grenze (7) zwischen der ersten Region (A) und der zweiten Region (B) existiert, und das Mittel (5), das zum Ermitteln von Übertragungsparametern konfiguriert ist, ferner so konfiguriert ist, dass es ermittelt, wenn der mobile Sender/Empfänger (3) in Bewegung ist, und das Umstellmittel ferner so konfiguriert ist, dass es von dem aktuellen Satz von Parametern auf die ermittelten kompatiblen Parameter umstellt, wenn der mobile Sender/Empfänger (3) den Übergangsbereich (9) von der ersten Region (A) zur zweiten Region (B) überquert.

16. Vorrichtung nach einem der Ansprüche 11 bis 15, wobei das Telekommunikationssystem mehrere Netzwerke umfasst, die jeweils ein geografisches Ausmaß und jeweils eine Teilmenge der genannten anderen damit assoziierten Sender/Empfänger haben, und so, dass:
das Positionsermittlungsmittel die Position des mobilen Senders/Empfängers mit Bezug auf die mehreren Netzwerke ermitteln kann, und
das Übertragungsparameterermittlungsmittel die Übertragungsparameter ermitteln kann, die von den mit den Netzwerken assoziierten Sendern/Empfängern innerhalb einer vorbestimmten Entfernung von dem mobilen Sender/Empfänger benutzt werden können.

17. Vorrichtung nach Anspruch 16, wobei das Mittel zum Ermitteln geeigneter Parameter die Aufgabe hat, Übertragungsparameter zu berechnen, die für die Verwendung mit den Netzwerken innerhalb einer vorbestimmten Entfernung von dem mobilen Sender/Empfänger geeignet sind.

18. Vorrichtung nach Anspruch 16 oder 17, wobei die Netzwerke aus GSM, 3G UMTS und IS-95 ausgewählt sind.

19. Vorrichtung nach Anspruch 16, 17 oder 18, wobei die Netzwerke von verschiedenen Typen sind.

20. Vorrichtung nach einem der Ansprüche 11 bis 19, wobei der mobile Sender/Empfänger und die genannten anderen Sender/Empfänger jeweils einen Basisstations-Sender/Empfänger umfassen,
das genannte Übertragungsparameterermittlungsmittel zum Ermitteln von Frequenzen konfiguriert ist, auf denen Übertragungen zwischen den Basisstationen und Endgeräten durchgeführt werden, und
das genannte Mittel zum Ermitteln von geeigneten Parametern die Aufgabe hat, geeignete Frequenzen zu ermitteln, die von dem mobilen Sender/Empfänger benutzt werden können und die dazu neigen, keine Übertragungen benachbarter Basisstations-Sender/Empfänger zu stören, und die Kommunikationen zwischen dem mobilen Basisstations-Sender/Empfänger und den Endgeräten gemäß den geeigneten Frequenzen zulassen.

21. Vorrichtung nach einem der Ansprüche 11 bis 20, wobei das Mittel zum Ermitteln von geeigneten Parametern die Aufgabe hat, Übertragungsparameter auszuwählen, die als mit den Übertragungsparametern des herannahenden Netzwerks kompatibel ermittelt wurden.

22. Vorrichtung nach einem der Ansprüche 11 bis 21 , wobei das Positionsermittlungsmittel (5) GPS benutzt.

## Revendications

1. Procédé destiné à permettre l'utilisation d'un émetteur-récepteur déplaçable (3) dans une position temporaire dans un système de télécommunications mobiles, ce système possédant une pluralité d'autres émetteurs-récepteurs associés à celui-ci pour assurer une transmission sans fil de données entre chaque émetteur-récepteur et des terminaux enregistrés auprès du système, le procédé englobant les opérations consistant à :
déterminer la position temporaire de l'émetteur-récepteur déplaçable de sorte que la position temporaire déterminée se trouve dans une première région (A ; Intl), et les autres émetteurs-récepteurs se trouvent dans une deuxième région (B ; C),
déterminer les paramètres de transmission utilisés par les autres émetteurs-récepteurs associés au système,
déterminer des paramètres appropriés utilisables par l'émetteur-récepteur déplaçable (3) pour permettre une communication entre l'émetteur-récepteur déplaçable (3) et des terminaux enregistrés auprès du système, de sorte que les paramètres déterminés soient compatibles avec les paramètres utilisés par les autres émetteurs-récepteurs, le procédé étant **caractérisé par** les opérations consistant à :
déterminer un ensemble de paramètres hybrides convenant à une utilisation tant dans la première région que dans la deuxième région, et
assurer la migration depuis un ensemble actuel de paramètres vers les paramètres compatibles déterminés par l'intermédiaire des paramètres hybrides.

2. Procédé selon la revendication 1, l'étape de migration comprenant en outre les opérations consistant à :
configurer l'émetteur-récepteur déplaçable de sorte qu'il soit apte à fonctionner avec l'ensemble actuel de paramètres et les paramètres hybrides, et
ensuite configurer l'émetteur-récepteur déplaçable de sorte que l'ensemble actuel de paramètres ne soit plus disponible, mais de sorte qu'il soit apte à fonctionner avec les paramètres compatibles déterminés et les paramètres hybrides.

3. Procédé selon la revendication 2, englobant en outre l'opération consistant à configurer ultérieurement l'émetteur-récepteur déplaçable de sorte qu'il soit exclusivement apte à fonctionner avec les paramètres compatibles déterminés.

4. Procédé selon l'une quelconque des revendications précédentes, l'étape de migration étant amorcée lorsqu'il a été déterminé que l'émetteur-récepteur déplaçable se rapproche d'une limite de couverture de réseau (7) des autres émetteurs-récepteurs.

5. Procédé selon l'une quelconque des revendications précédentes, une zone de transition (9) existant au voisinage d'une frontière (7) entre la première région (A) et la deuxième région (B), le procédé comprenant en outre les opérations consistant à :
déterminer que l'émetteur-récepteur déplaçable est en train de se déplacer vers la deuxième région (B) ; et
assurer la migration depuis l'ensemble actuel de paramètres vers les paramètres compatibles déterminés au fur et à mesure que l'émetteur-récepteur déplaçable traverse la zone de transition (9) de la première région (A) vers la deuxième région (B).

6. Procédé selon la revendication 1, le système de télécommunications englobant une pluralité de réseaux, chacun ayant une étendue géographique et chacun possédant un sous-ensemble desdits autres émetteurs-récepteurs associés à celui-ci, et cas dans lequel l'étape de détermination de la position détermine la position de l'émetteur-récepteur déplaçable par rapport à la pluralité de réseaux, alors que l'étape de détermination des paramètres de transmission détermine les paramètres de transmission utilisés par les émetteurs-récepteurs associés aux réseaux.

7. Procédé selon la revendication 6, l'étape de calcul permettant de calculer les paramètres de transmission convenant à une utilisation avec les réseaux au sein d'une portée prédéterminée de l'émetteur-récepteur déplaçable.

8. Procédé selon l'une quelconque des revendications précédentes, l'émetteur-récepteur déplaçable et lesdits autres émetteurs-récepteurs comprenant chacun un émetteur-récepteur de station de base, et
ladite étape de détermination desdits paramètres de transmission comprenant la détermination des fréquences auxquelles des transmissions entre les autres émetteurs-récepteurs et des terminaux sont effectuées, et
ladite étape de détermination de paramètres appropriés permettant de déterminer des fréquences appropriées utilisables par l'émetteur-récepteur déplaçable qui n'auront pas tendance à perturber les transmissions faites par les émetteurs-récepteurs de stations de base avoisinantes et qui vont assurer des communications entre l'émetteur-récepteur de station de base déplaçable et les terminaux en fonction des fréquences appropriées.

9. Procédé selon la revendication 1 , l'étape de détermination de la position déterminant le moment auquel l'émetteur-récepteur déplaçable s'approche d'un réseau, l'étape de détermination des paramètres de transmission permettant de déterminer les paramètres de transmission du réseau duquel on s'approche, et l'étape de détermination de paramètres compatibles appropriés englobant la sélection de paramètres de transmission qui ont été prédéterminés pour être compatibles avec les paramètres de transmission du réseau duquel on s'approche.

10. Procédé selon l'une quelconque des revendications précédentes, l'étape de détermination de la position étant réalisée grâce à la technologie GPS.

11. Appareil conçu pour permettre l'utilisation d'un émetteur-récepteur déplaçable (3) dans une position temporaire dans un système de télécommunications mobiles, ce système incluant une pluralité d'autres émetteurs-récepteurs associés à celui-ci pour assurer une transmission sans fil de données entre chaque émetteur-récepteur et des terminaux enregistrés auprès du système, l'appareil englobant :
des moyens (5) configurés de façon à déterminer la position temporaire de l'émetteur-récepteur déplaçable (3), de sorte que la position temporaire déterminée se trouve dans une première région (A ; Intl), et les autres émetteurs-récepteurs se trouvent dans une deuxième région (B ; C),
des moyens configurés de façon à déterminer des paramètres de transmission utilisés par lesdits autres émetteurs-récepteurs dans le système,
des moyens configurés de façon à déterminer des paramètres appropriés utilisables par l'émetteur-récepteur déplaçable (3) pour permettre des communications entre l'émetteur-récepteur déplaçable et des terminaux enregistrés auprès du système, de sorte que les paramètres déterminés soient compatibles avec les paramètres utilisés par les autres émetteurs-récepteurs, et l'appareil étant **caractérisé par** :
des moyens configurés de façon à déterminer un ensemble de paramètres hybrides convenant à une utilisation tant dans la première région que dans la deuxième région, et
des moyens configurés de façon à assurer la migration depuis un ensemble actuel de paramètres vers les paramètres compatibles calculés par l'intermédiaire des paramètres hybrides.

12. Appareil selon la revendication 11, les moyens de migration étant conçus pour :
configurer l'émetteur-récepteur déplaçable de sorte qu'il soit apte à fonctionner avec l'ensemble actuel de paramètres et les paramètres hybrides, et
ensuite configurer l'émetteur-récepteur déplaçable de sorte que l'ensemble actuel de paramètres ne soit plus disponible, mais de sorte qu'il soit apte à fonctionner avec les paramètres compatibles déterminés et les paramètres hybrides.

13. Appareil selon la revendication 12, les moyens de migration étant conçus en outre pour configurer ultérieurement l'émetteur-récepteur déplaçable de sorte qu'il soit exclusivement apte à fonctionner avec les paramètres compatibles déterminés.

14. Appareil selon l'une quelconque des revendications 11 à 13, les moyens de migration étant en outre configurés de façon à amorcer la migration lorsqu'il a été déterminé que l'émetteur-récepteur déplaçable (3) se rapproche d'une limite de couverture de réseau pour les autres émetteurs-récepteurs.

15. Appareil selon la revendication 11, 12 ou 13, une zone de transition (9) existant au voisinage d'une limite (7) entre la première région (A) et la deuxième région (B), et les moyens (5) configurés pour déterminer des paramètres de transmission étant en outre configurés de façon à déterminer le moment auquel l'émetteur-récepteur déplaçable (3) est en train de se déplacer, et les moyens de migrations étant en outre configurés de façon à assurer la migration depuis l'ensemble actuel de paramètres vers les paramètres compatibles déterminés au fur et à mesure que l'émetteur-récepteur déplaçable (3) traverse la zone de transition (9) de la première région (A) vers la deuxième région (B).

16. Appareil selon l'une quelconque des revendications 11 à 15, le système de télécommunications englobant une pluralité de réseaux, chacun ayant une étendue géographique et chacun possédant un sous-ensemble desdits autres émetteurs-récepteurs associés à celui-ci, et de sorte que :
les moyens de détermination de la position sont aptes à fonctionner de façon à déterminer la position de l'émetteur-récepteur déplaçable par rapport à la pluralité de réseaux, et
les moyens de détermination des paramètres de transmission sont aptes à fonctionner de façon à déterminer les paramètres de transmission utilisés par les émetteurs-récepteurs associés aux réseaux au sein d'une portée prédéterminée de l'émetteur-récepteur déplaçable.

17. Appareil selon la revendication 16, les moyens de détermination de paramètres appropriés étant aptes à fonctionner de façon à calculer les paramètres de transmission convenant à une utilisation avec les réseaux au sein d'une portée prédéterminée de l'émetteur-récepteur déplaçable.

18. Appareil selon la revendication 16 ou 17, les réseaux étant sélectionnés parmi les suivants, à savoir : GSM, 3G UMTS et IS-95.

19. Appareil selon la revendication 16, 17 ou 18, les réseaux étant de types différents.

20. Appareil selon l'une quelconque des revendications 11 à 19, l'émetteur-récepteur déplaçable et lesdits autres émetteurs-récepteurs comprenant chacun un émetteur-récepteur de station de base,
lesdits moyens de détermination des paramètres de transmission étant configurés de façon à déterminer des fréquences auxquelles des transmissions entre les stations de base et des terminaux sont effectuées, et
lesdits moyens de détermination de paramètres appropriés étant aptes à fonctionner de façon à déterminer des fréquences appropriées utilisables par l'émetteur-récepteur déplaçable qui n'auront pas tendance à perturber les transmissions faites par les émetteurs-récepteurs de stations de base avoisinantes et qui vont assurer des communications entre l'émetteur-récepteur de station de base déplaçable et les terminaux en fonction des fréquences appropriées.

21. Appareil selon l'une quelconque des revendications 11 à 20, les moyens de détermination de paramètres appropriés étant aptes à fonctionner de façon à sélectionner des paramètres de transmission qui ont été prédéterminés pour être compatibles avec les paramètres de transmission du réseau duquel on s'approche.

22. Appareil selon l'une quelconque des revendications 11 à 21, les moyens de détermination de la position (5) utilisant la technologie GPS.
